# EUROPÄISCHE PATENTSCHRIFT

(11) **EP 0 997 356 B1**
(45) Veröffentlichungstag und Bekanntmachung des Hinweises auf die Patenterteilung: **03.03.2004**
(21) Anmeldenummer: 99120858.8
(22) Anmeldetag: 26.10.1999
(51) Int. Cl.: B60R 21/26

(54) **Gasgenerator, insbesondere für Fahrzeuginsassen-Rückhaltesysteme**
Gas generator for vehicle passenger restraint systems in particular
Générateur de gaz pour systèmes de retenue de passager dans un véhicule, en particulier

(30) Priorität: 27.10.1998 DE 29819168 U
(43) Veröffentlichungstag der Anmeldung: 03.05.2000
(73) Patentinhaber: TRW Airbag Systems GmbH, 84544 Aschau am Inn (DE)
(72) Erfinder: Esau, Anja, 84539 Ampfing (DE)
(74) Vertreter: Kitzhofer, Thomas, Dipl.-Ing.

(56) Entgegenhaltungen:
- EP-A- 0 428 298
- EP-A- 0 728 632
- US-A- 4 005 876
- US-A- 4 158 696
- PATENT ABSTRACTS OF JAPAN vol. 1998, no. 01, 30. Januar 1998 (1998-01-30) & JP 09 226508 A (NIPPON KAYAKU CO LTD;SENSOR TECHNOL KK), 2. September 1997 (1997-09-02)

## Beschreibung

Die Erfindung betrifft einen Gasgenerator, insbesondere für Fahrzeuginsassen-Rückhaltesysteme, nach dem Oberbegriff des Anspruchs 1.

Bei sich unmittelbar in der Nähe von Ausströmöffnungen befindenden gasdurchlässigen Zwischenwänden wie Filtern besteht die Gefahr, daß eine Zwischenwand im Bereich der Auslaßöffnung thermisch überlastet wird und teilweise verbrennt. Die Ursache hierfür liegt darin, daß die Zwischenwand unmittelbar am Gehäuse anliegt, so daß ein Gasdurchtritt nicht über den gesamten Bereich der Zwischenwand erfolgt, sondern im wesentlichen nur im Bereich der Auslaßöffnungen. Unter den Begriff Gehäuse fällt nicht nur ein Außengehäuse, sondern auch ein Innengehäuse. Um die Gefahr der thermischen Überlastung der Zwischenwand zu verringern, ist üblicherweise ein Abstandhalter zwischen der mit Auslaßöffhungen versehenen Wand und der Zwischenwand vorgesehen, der ein Hinterströmen der Zwischenwand erlaubt. Damit wird die durchströmte Fläche der Zwischenwand deutlich vergrößert und die thermische Belastung über die gesamte Zwischenwand verteilt. Der Abstandhalter wird bislang als separates, in das Gehäuse eingesetztes Teil ausgeführt. Dieses Teil kann beispielsweise als zylindrisches Sieb oder ein aus Draht gefertigter Abstandhalter sein.

Aus der gattungsgemäßen EP-A-0 728 632 ist ein Gasgenerator bekannt, dessen Außengehäuse aus zwei topfförmigen, ineinander gesteckten Teilen besteht. Ein Teil hat am Übergang von der Stirn- zur Umfangswand eine Ringschulter, die als Abstandshalter dient, und das andere Teil hat einen axial vorspringenden Rand, der ebenfalls als Abstandshalter dient. Diese Konstruktion ist fertigungstechnisch aufwendig.

Die Erfindung schafft einen kostengünstigeren und einfacher aufgebauten Gasgenerator.

Dies wird bei einem Gasgenerator der eingangs genannten Art erfindungsgemäß dadurch erreicht, daß das Gehäuse durch Umformen des Gehäuses gebildete, als Abstandhalter wirkende radiale Vorsprünge aufweist. Das Gehäuse und der Abstandhalter sind einstückig ausgebildet. Im Bereich zwischen den Vorsprüngen liegt die Zwischenwand nicht am Gehäuse an und ist von diesem beabstandet.

Vorzugsweise grenzt die Zwischenwand unmittelbar an das als Außengehäuse dienende Gehäuse an. (Das Gehäuse kann ferner das Gehäuse einer Filterkammer sein, in der die Zwischenwand angeordnet ist.)

Darüber hinaus sind gemäß einer anderen Ausgestaltung das mit den Vorsprüngen versehene Gehäuse und die Zwischenwand jeweils zylindrisch ausgebildet und koaxial zueinander angeordnet. Die Vorsprünge dienen damit nicht nur der Befestigung, sondern auch noch der Zentrierung der Teile zueinander.

Die Vorsprünge sind im wesentlichen punkt- oder linienförmig und vorzugsweise durch Umformen des Gehäuses gebildet, zum Beispiel durch Aufbringen einer radialen Kraft, so daß sich radial nach innen ragende Sicken in einer Umfangswand des zylindrischen Gehäuses ergeben.

Falls auch in axialer Richtung eine Beabstandung der Zwischenwand von einer Stirnwand vorgesehen sein soll, kann dies zum Beispiel dadurch geschehen, daß in einem Übergängsbereich des Gehäuses, der im Bereich des Übergangs einer Stirnwand zu einem Teil der aus mehreren Teilen bestehenden Umfangswand vorgesehen ist, die Zwischenwand mit ihrem stirnseitigen Ende an dem Gehäuse anliegt.

Die Zwischenwand kann ein Filter, der aus einem mehrschichtigen Gestrick besteht, oder zum Beispiel eine Art Lochblech sein. Die Zwischenwand muß nicht zwingend in einer Filterkammer angeordnet sein, sondern kann auch in einer Brennkammer liegen und unmittelbar innenseitig an den Treibstoff und außenseitig an die im Mantel, d.h. einer Umfangswand des Gehäuses ausgebildeten Vorsprüngen, angrenzen. Zwischen den Vorsprüngen und der Zwischenwand ergeben sich mehrere Zwischenräume. In diese Zwischenräume kann das erzeugte Gas einströmen und auch wieder zurück in die' Brennkammer gelangen, wo es Treibstoff anzündet.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 eine Längsschnittansicht durch einen erfindungsgemäßen Rohrgasgenerator,
Figur 2 eine Querschnittsansicht längs der Linie II-II in Figur 1,
Figur 3 eine Längsschnittansicht durch eine zweite Ausführungsform des erfindungsgemäßen Rohrgasgenerators, bei dem ein Filter in der Brennkammer angeordnet ist und an die Vorsprünge angrenzt, und
Figur 4 eine Querschnittsansicht längs der Linie IV-IV in Figur 3.

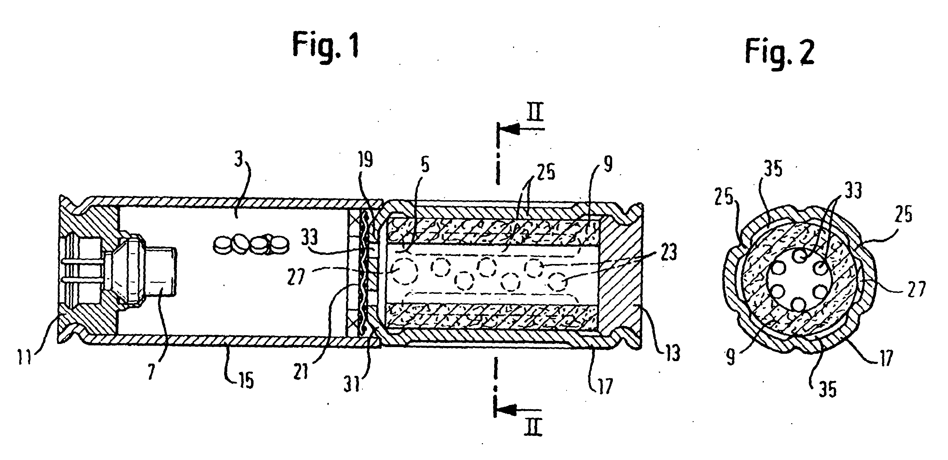

In Figur 1 ist ein Rohrgasgenerator dargestellt, der eine mit einem Festtreibstoff gefüllte Brennkammer 3 und eine sich strömungsmäßig daran anschließende Filterkammer 5 umfaßt. Ein Zünder ist mit 7 bezeichnet. In der Filterkammer sitzt eine darin befestigte, poröse, d.h. gasdurchlässige Zwischenwand in Form eines zylindrischen Filters 9. Der Gasgenerator hat ein aus mehreren Teilen bestehendes Gehäuse. Das Gehäuse umfaßt ein Außengehäuse mit einer Stirnwand 11, in der der Zünder 7 untergebracht ist, sowie mit einer Stirnwand 13, die am entgegengesetzten Ende angeordnet ist. Darüber hinaus umfaßt das Außengehäuse eine aus mehreren, separaten Teilen 15, 17 bestehende zylindrische Umfangswand, wobei ein Teil 15 die Brennkammer 3 begrenzent und ein Teil 17 die Filterkammer 5 begrenzt Das Teil 17 geht einstückig in eine Trennwand 19 über, welche Brennkammer 3 und Filterkammer 5 voneinander trennt. An der Trennwand 19 liegt ein scheibenförmiger Zwischenfilter 21 an. Das der Filterkammer 5 zugeordnete Gehäuse besteht aus dem Teil 17 und der Trennwand 19. Es ist in das Teil 15 der Umfangswand eingesteckt und darin zentriert, so daß die die Umfangswand bildenden Teile 15 und 17 koaxial zueinander angeordnet sind. Im übrigen sind sie durch Schweißen miteinander verbunden. Das Teil 17 hat auf seinem Umfang verteilt zahlreiche Auslaßöffnungen 23 über die, wie noch später erläutert wird, das erzeugte Gas beispielsweise in einen Gassack strömt. Das Teil 17 der Umfangswand ist auch Bestandteil des der Filterkammer zugeordneten Gehäuses hat mehrere radial nach innen ragende Vorsprünge 25, die durch Umformen der Umfangswand gebildet werden. Hierzu wird von außen eine Kiaft auf die Umfangswand aufgebracht, diese wird dadurch verformt, und es entstehen radial nach innen ragende Vorsprünge in Form von Sicken. Diese Sicken können sich, wie in Figur 1 gezeigt, axial sowie linear erstrecken, wie dies mit den linear verlaufenden Vorsprüngen 25 gezeigt ist. Darüber hinaus können auch punktfönmige Vorsprünge vorgesehen sein, wie dies beispielhaft am Vorsprung 27 dargestellt ist.

Die Vorsprünge 25 und 27 dienen der Beabstandung des Filters 9 zur Innenseite der Umfangswand, so daß dieser von Gas hinterströmt wird. Nur im Bereich der Vorsprünge 25 und 27 liegt nämlich der Filter 9 an der Umfangswand an. Die Vorsprünge 25 und 27 dienen damit als Abstandhalter. Zwischen Umfangswand und Filter 9 ergeben sich dadurch mehrere Zwischenräume 35.

Der Filter 9 liegt im Bereich seines zur Brennkammer 3 gewandten Endes nicht an der Trennwand 19 an, sondern ist auch von ihr beabstandet. Zwischen der sich radial erstreckenden Trennwand 19 und dem sich axial erstreckenden zylindrischen Abschnitt des Teils 17 ist hierzu ein abgeschrägter Übergangsbereich 31 vorgesehen, an dem der Filter 9 mit seinem stirnseitigen Ende anliegt.

Beim Zünden des Treibstoffs entsteht Gas, welches unter anderem heiße Schlacke mit sich führt. Zum Teil wird diese Schlacke in dem Zwischenfilter 21 aufgefangen. Das Gas durchströmt anschließend Öffnungen 33 in der Trennwand 19 und gelangt in die Filterkammer 5. Das Gas kann den Filter 9 in radialer Richtung auf fast der gesamten Filterfläche durchdringen, da, bis auf die linien- oder punktförmige Berührung mit den Vorsprüngen 25 beziehungsweise 27, kein unmittelbarer Kontakt von Filter 9 und Umfangswand 17 auftritt. Das den Filter 9 durchströmende Gas hinterströint den Filter, indem es in die Zwischenräume 35 zwischen dem Filter 9 und der Umfangswand gelangt und verläßt den Gasgenerator über die Auslaßöffnungen 23.

Die durchströmte Fläche des Filters 9 ist sehr groß, so daß der Filter 9 thermisch nicht überlastet wird. Der durch die Vorsprünge 25, 27 gebildete Abstandhalter, der zur radialen Zentrierung und Fixierung des Filters 9 benutzt wird, ist einfach in seiner Herstellung. Die axiale Festlegung des Filters 9 erfolgt dadurch, daß der Filter zwischen der Zwischenwand 19 und der Stirnwand 13 eingespannt ist.

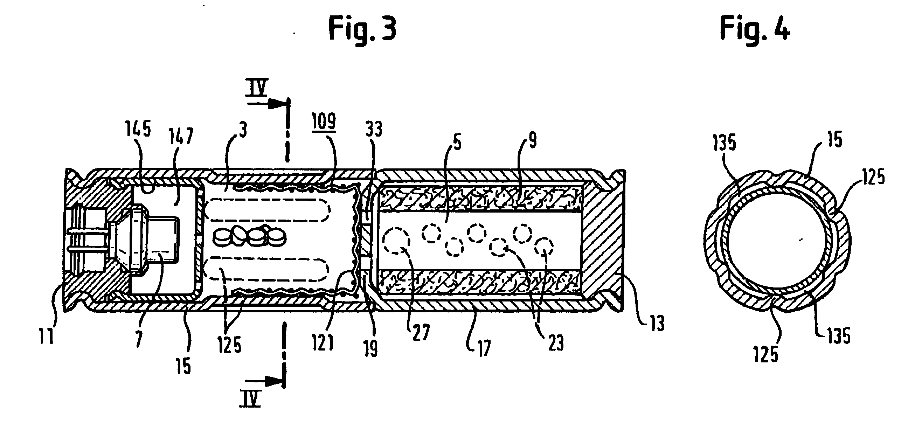

Die in Figur 3 gezeigte Ausführungsform entspricht in einigen Details der Ausführungsform nach den Figuren 1 und 2. Die bereits eingeführten Bezugszahlen werden deshalb für die entsprechenden Teile auch bei dieser Ausführungsform verwendet.

In den Figuren 3 und 4 ist zu erkennen, daß auch in der Brennkammer 3 ein Filter 109 angeordnet ist. Der Filter 109 ist topfförmig ausgebildet, wobei sein Boden 121 an der Trennwand 19 anliegt. Der Boden 121 entspricht in seiner Funktion dem Zwischenfilter 21 in Figur 1. Der Mantel des Filters 109 liegt an Vorsprüngen 125 in Form von Sicken an der Umfangswand 15 an. Die Vorsprünge 125 entsprechen den Vorsprüngen 25. Zwischen dem Mantel des Filters 109 und dem Teil 15 der Umfangswand ergeben sich damit Zwischenräume 135. Der Zünder 7 ist bei dieser Ausführungsform durch eine Art Deckel 145 umgeben, so daß ein Expansionsraum 147 gebildet wird.

Beim Zünden des Gasgenerators wird der Treibstoff stimseitig gezündet, d.h. von Seiten des Deckels 145. Das erzeugte Gas tritt teilweise, da der Filter 109 nicht bis zum Deckel 145 reicht, unmittelbar in die Zwischenräume 135 ein, zum Teil durchströmter den Filter im Bereich des Mantels 109 radial, um in die Zwischenräume 135 zu gelangen; Durch die durch die Vorsprünge 125 gebildeten Zwischenräume 135 wird der Filter 109 sehr gleichmäßig durchströmt. Dadurch erhöht sich auch dessen Filterleistung. In den Zwischenräumen 135 kann sich zudem Schlacke ansammeln, die ansonsten aus der Brennkammer 3 herausgerissen werden könnte. Darüber hinaus können Anzündgase oder Anzündpartikel, die sich in den Zwischenräumen 135 befinden, auch wieder durch den Filter hindurch an den noch nicht gezündeten Treibstoff gelangen und diesen von außen anbrennen. Dadurch ergibt sich ein sehr gleichmäßiges Anzünden des Treibstoffes. Der durch das ausschließlich stirnseitige Anzünden hervorgerufene sogenannte Anzündschlag,. der sich in Richtung zu den Öffnungen 33 fortpflanzt, kann so verringert oder sogar vermieden werden, so daß es nicht zu einem unerwünscht plötzlichen extremen Druckanstieg kommt.

## Patentansprüche

1. Gasgenerator, insbesondere für Fahrzeuginsassen-Rückhaltesysteme, mit
wenigstens einem Gehäuse mit Auslaßöffnungen (23),
einer mit Treibstoff gefüllten Brennkammer (3), in der auf Aktivierung des Gasgenerators hin Gas erzeugt wird,
wenigstens einer porösen Zwischenwand, die im Gehäuse befestigt ist und durch die Gas in Richtung zu den Auslaßöffnungen (23) strömt, und
einem in Richtung zur Zwischenwand ragenden Abstandhalter, der die Zwischenwand vom Gehäuse so entfernt hält, daß ein Zwischenraum (35; 135), in den Gas einströmen kann, entsteht,
**dadurch gekennzeichnet, dass** das Gehäuse durch Umformen des Gehäuses gebildete, als Abstandhalter wirkende radiale Vorsprünge (25, 27; 125) aufweist.

2. Gasgenerator nach Anspruch 1, **dadurch gekennzeichnet, daß** das mit den Vorsprüngen (25, 27; 125) versehene Gehäuse das Außengehäuse des Gasgenerators ist.

3. Gasgenerator nach Anspruch 1 oder 2, **dadurch gekennzeichnet, daß** das mit den Vorsprüngen (25, 27; 125) versehene Gehäuse und die Zwischenwand zylindrisch ausgebildet und koaxial zueinander angeordnet sind.

4. Gasgenerator nach einem der vorhergehenden Ansprüche, **dadurch gekennzeichnet, daß** die Vorsprünge (25, 27; 125) linear verlaufen oder im wesentlichen punktförmig ausgebildet sind.

5. Gasgenerator nach einem der vorhergehenden Ansprüche, **dadurch gekennzeichnet, daß** die Vorsprünge (25, 27; 125) radial nach innen ragende Sicken sind, welche durch Verformen der Umfangswand eines zylindrischen Gehäuses gebildet sind.

6. Gasgenerator nach einem der vorhergehenden Ansprüche, **dadurch gekennzeichnet, daß** das Gehäuse des Gasgenerators Stirnwände (11, 13) und eine aus wenigstens einem Teil bestehende Umfangswand aufweist, wobei die Umfangswand die Vorsprünge (25, 27; 125) aufweist.

7. Gasgenerator nach Anspruch 6, **dadurch gekennzeichnet, daß** die Umfangswand aus mehreren Teilen (15, 17) besteht, wobei ein Teil (17) im Bereich eines seiner axialen Enden einen abgeschrägten, radial nach innen ragenden Übergangsbereich (31) aufweist, wobei die Zwischenwand in diesem Übergangsbereich (31) an dem Gehäuse anliegt.

8. Gasgenerator nach einem der vorhergehenden Ansprüche, **dadurch gekennzeichnet, daß** das Gehäuse ein Teil (15) einer Umfangswand aufweist, das der Brennkammer (3) zugeordnet ist, und ein Teil (17) der Umfangswand, das einer Filterkammer (5) zugeordnet ist, wobei eine der beiden Teile (17) teilweise in das andere Teil (15) ragt, wodurch die beiden Teile (15, 17) zueinander zentriert sind.

9. Gasgenerator nach einem der vorhergehenden Ansprüche, **dadurch gekennzeichnet, daß** die Zwischenwand ein Filter (9, 109) ist.

10. Gasgenerator nach Anspruch 9, **dadurch gekennzeichnet, daß** der Filter (9) in einer Filterkammer (5) angeordnet ist und das Gehäuse die Filterkammer (5) radial und umfangsmäßig begrenzt.

11. Gasgenerator nach einem der vorhergehenden Ansprüche, **dadurch gekennzeichnet, daß** die Zwischenwand in der Brennkammer (3) angeordnet ist.

12. Gasgenerator nach Anspruch 11, **dadurch gekennzeichnet, daß** die Zwischenwand ein Filter (109) ist, der an den in der Brennkammer (3) untergebrachten Treibstoff angrenzt.

## Claims

1. A gas generator, in particular for vehicle occupant restraint systems, comprising
at least one housing having outlet openings (23),
a combustion chamber (3) which is filled with propellant and in which gas is generated on activation of the gas generator,
at least one porous intermediate wall which is secured in the housing and through which gas flows towards the outlet openings (23), and
a spacer protruding towards the intermediate wall and keeping the intermediate wall so far apart from the housing that an intermediate space (35; 135) is produced, into which gas can flow,
**characterized in that** the housing has radial projections (25, 27; 125) formed by reshaping the housing and acting as spacers.

2. The gas generator according to Claim 1, **characterized in that** the housing provided with the projections (25, 27; 125) is the outer housing of the gas generator.

3. The gas generator according to Claim 1 or 2, **characterized in that** the housing provided with the projections (25, 27; 125) and the intermediate wall are constructed so as to be cylindrical and are arranged coaxially in relation to each other.

4. The gas generator according to any of the preceding claims, **characterized in that** the projections (25, 27; 125) run linearly or are constructed so as to be substantially punctiform.

5. The gas generator according to any of the preceding claims, **characterized in that** the projections (25, 27; 125) are radially inwardly projecting beads which are formed by deforming the peripheral wall of a cylindrical housing.

6. The gas generator according to any of the preceding claims, **characterized in that** the housing of the gas generator has end walls (11, 13) and a peripheral wall consisting of at least one part, the peripheral wall including the projections (25, 27; 125).

7. The gas generator according to Claim 6, **characterized in that** the peripheral wall consists of a plurality of parts (15, 17), one part (17) having in the region of one of its axial ends a bevelled, radially inwardly projecting transition region (31), the intermediate wall lying against the housing in this transition region (31).

8. The gas generator according to any of the preceding claims, **characterized in that** the housing includes a part (15) of a peripheral wall which is associated with the combustion chamber (3), and a part (17) of the peripheral wall which is associated with a filter chamber (5), one of the two parts (17) partially projecting into the other part (15), whereby the two parts (15, 17) are centered with respect to each other.

9. The gas generator according to any of the preceding claims, **characterized in that** the intermediate wall is a filter (9, 109).

10. The gas generator according to Claim 9, **characterized in that** the filter (9) is arranged in a filter chamber (5) and the housing delimits the filter chamber (5) radially and peripherally.

11. The gas generator according to any of the preceding claims, **characterized in that** the intermediate wall is arranged in the combustion chamber (3).

12. The gas generator according to Claim 11, **characterized in that** the intermediate wall is a filter (109) which adjoins the propellant accommodated in the combustion chamber (3).

## Revendications

1. Générateur de gaz, en particulier pour des systèmes de retenue de passagers de véhicules, comportant
au moins un boîtier avec des orifices de sortie (23),
une chambre de combustion (3) remplie de combustible, dans laquelle du gaz est engendré sur activation du générateur de gaz,
au moins une paroi intermédiaire poreuse qui est fixée dans le boîtier et à travers laquelle du gaz s'écoule en direction des orifices de sortie (23), et
un écarteur faisant saillie en direction de la paroi intermédiaire, lequel maintient la paroi intermédiaire éloignée du boîtier de telle sorte qu'il se forme un espace intermédiaire (35 ; 135) dans lequel du gaz peut s'écouler,
**caractérisé en ce que** le boîtier présente des saillies (25, 27 ; 125) radiales formées par façonnage du boîtier et faisant office d'écarteur.

2. Générateur de gaz selon la revendication 1, **caractérisé en ce que** le boîtier pourvu des saillies (25, 27 ; 125) est le boîtier extérieur du générateur de gaz.

3. Générateur de gaz selon la revendication 1 ou 2, **caractérisé en ce que** le boîtier pourvu des saillies (24, 25 ; 125) et la paroi intermédiaire sont réalisés de forme cylindrique et sont agencés de manière coaxiale l'un par rapport à l'autre.

4. Générateur de gaz selon l'une des revendications précédentes, **caractérisé en ce que** les saillies (24, 25 ; 125) s'étendent de façon linéaire ou sont réalisées sensiblement sous forme de points.

5. Générateur de gaz selon l'une des revendications précédentes, **caractérisé en ce que** les saillies (24, 25 ; 125) sont des moulures faisant saillie radialement vers l'intérieur, qui sont formées par déformation de la paroi périphérique d'un boîtier cylindrique.

6. Générateur de gaz selon l'une des revendications précédentes, **caractérisé en ce que** le boîtier du générateur de gaz présente des parois frontales (11, 13) et une paroi périphérique constituée par au moins une partie, la paroi périphérique présentant les saillies (25, 27 ; 125).

7. Générateur de gaz selon la revendication 6, **caractérisé en ce que** la paroi périphérique est constituée par plusieurs parties (15, 17), une partie (17) présentant dans la zone de ses extrémités axiales une zone de transition (31) chanfreinée faisant saillie radialement vers l'intérieur, la paroi intermédiaire étant en appui sur le boîtier dans cette zone de transition (31).

8. Générateur de gaz selon l'une des revendications précédentes, **caractérisé en ce que** le boîtier présente une partie (15) d'une paroi périphérique qui est associée à la chambre de combustion (3), et une partie (17) de la paroi périphérique qui est associée à une chambre de filtration, une des deux parties (17) faisant partiellement saillie dans l'autre partie (15), à la suite de quoi les deux parties (15, 17) sont centrées l'une par rapport à l'autre.

9. Générateur de gaz selon l'une des revendications précédentes, **caractérisé en ce que** la paroi intermédiaire est un filtre (9, 109).

10. Générateur de gaz selon la revendication 9, **caractérisé en ce que** le filtre (9) est agencé dans une chambre de filtration (5) et le boîtier délimite la chambre de filtration (5) radialement et sur sa périphérie.

11. Générateur de gaz selon l'une des revendications précédentes, **caractérisé en ce que** la paroi intermédiaire est agencée dans la chambre de combustion (3).

12. Générateur de gaz selon la revendication 11, **caractérisé en ce que** la paroi intermédiaire est un filtre (109) qui est adjacent au combustible logé dans la chambre de combustion (3).
